# EUROPÄISCHE PATENTANMELDUNG

(11) **EP 2 110 061 A1**
(43) Veröffentlichungstag der Anmeldung: **21.10.2009**
(21) Anmeldenummer: 09003584.1
(22) Anmeldetag: 12.03.2009
(51) Int. Cl.: A47J 47/01

(54) **Behälter für schüttbare Lebensmittel**

(30) Priorität: 18.04.2008 DE 202008005447 U
(71) Anmelder: Rotho Kunststoff AG, 5303 Würenlingen (CH)
(72) Erfinder: Thoma, Christian, 79774 Albbruck (DE)
(74) Vertreter: Lemcke, Brommer & Partner

(57) **Zusammenfassung**

Die Erfindung betrifft einen Behälter für schüttbare Lebensmittel, der insbesondere aus Kunststoff besteht. Der Behälter umfasst einen Behältergrundkörper 1 und einen Deckel 2 mit einer Schüttöffnung 7, die mit einem fest angeordneten oder bedarfsweise über die Schüttöffnung 7 bewegbaren, in sich starr ausgebildeten Streusieb 9 versehen ist. Das Streusieb 9 weist wenigstens eine erste Reihe von Streuöffnungen 14 auf, die im Wesentlichen entlang eines Schüttrandes 19 der Schüttöffnung 7 angeordnet und durch Stege 16 voneinander getrennt sind, wobei die Stege 16 zwischen den Streuöffnungen 14 zumindest der ersten Reihe ein auf der nach Außen weisenden Oberfläche des Streusiebs 9 gewölbtes, zu den Streuöffnungen 14 hin abfallendes Profil aufweisen.

## Beschreibung

Die Erfindung betrifft einen Behälter für schüttbare Lebensmittel, insbesondere aus Kunststoff, nach dem Oberbegriff des Anspruchs 1. Ein Behälter der vorliegenden Art umfasst demnach einen Behältergrundkörper sowie einen Deckel mit einer Schüttöffnung. Die Schüttöffnung des Deckels ist mit einem fest angeordneten oder bedarfsweise über die Schüttöffnung bringbaren, in sich starr ausgebildeten Streusieb versehen. Dieses Streusieb weist wenigstens eine erste Reihe von Streuöffnungen auf, die im Wesentlichen entlang eines Schüttrandes der Schüttöffnung angeordnet und durch mehr oder weniger breite Stege, deren Form von der Form der Streuöffnungen vorgegeben ist, voneinander getrennt sind.

Behälter der vorliegenden Art werden beispielsweise zur Vorhaltung und Portionierung von Kristallzucker, Salz, Grieß und dergleichen körnigen, schüttbaren Lebensmittel verwendet. Wenn das Streusieb nicht starr über der Schüttöffnung befestigt, sondern bedarfsweise über die Schüttöffnung bewegbar ist, können die entsprechenden Lebensmittel in einem Behälter der vorliegenden Art auch langfristig aufbewahrt und, ohne sie zuvor umfüllen zu müssen, fein dosiert entnommen werden. Zum Nachfüllen des Behälters oder zum Entnehmen größerer Mengen des Inhalts kann der Deckel vom Behältergrundkörper abgenommen werden.

Bei bislang bekannten Behältern der vorliegenden Art ergibt sich jedoch oft das Problem, dass ein Rest der ausgeschütteten Lebensmittelkörner, beispielsweise Salzkörner oder Zuckerkristalle, nach dem Streuvorgang, nachdem der Behälter wieder in seine Ausgangslage gestellt wurde, auf den Zwischenräumen d.h. Stegen zwischen den Streuöffnungen des Streusiebs liegen bleiben. Dies führt insbesondere dann, wenn der Behälter auch zum Aufbewahren von dessen Inhalt verwendet wird, indem das Streusieb abgedeckt oder von der Streuöffnung entfernt wird, zu Schwierigkeiten, da die auf den Stegen des Streusiebs verbleibenden Rückstände nicht einfach durch Neigen des Behälters entfernt werden können, ohne dass weitere Körner durch die Streuöffnungen nach Außen treten.

Der vorliegenden Erfindung liegt daher die Aufgabe zugrunde, einen Behälter der eingangs genannten Art hinsichtlich der genannten Probleme zu verbessern.

Gelöst ist diese Aufgabe durch einen Behälter mit den Merkmalen des Anspruchs 1. Vorteilhafte Ausgestaltungen des erfindungsgemäßen Behälters sind in den Ansprüchen 2 bis 17 niedergelegt.

Ein Behälter der eingangs genannten Art weist nach der vorliegenden Erfindung also ein speziell ausgestaltetes Streusieb aus. Bei diesem sind die Stege zwischen den Streuöffnungen zumindest der ersten Reihe von Streuöffnungen nach Außen gewölbt, d.h. das Profil des zwischen den Streuöffnungen derersten Reihe befindlichen Streusieb-Materials ist jeweils mit einem Profil versehen, das zu den Streuöffnungen hin abfällt. Dies kann insbesondere so aussehen, dass die Stege ein im Wesentlichen zylindrisches oder konvexes Profil, oder aber eine sattelflächenartige Form aufweisen.

Mit dieser speziellen Ausbildung des Streusiebs zumindest in der ersten Reihe von Streuöffnungen ist gewährleistet, dass nach einem Ausstreuen von körnigem Inhalt beim Zurückbewegen des Behälters in seine aufrechte Ausgangsstellung keine Körner zwischen den Streuöffnungen mehr liegen bleiben, sondern aufgrund der gewölbten Ausbildung der zwischen den Streuöffnungen befindlichen Stege in jedem Fall wieder durch die Streuöffnungen hindurch in das Innere des Behälters zurückfallen. Sofern das erfindungsgemäß ausgestaltete Streusieb mehr als eine Reihe von Streuöffnungen aufweist, können auch alle Stege zwischen den Streuöffnungen, auch die zwischen zwei benachbarten Reihen von Streuöffnungen, nach außen gewölbt ausgebildet sein, um ein Liegenbleiben von körnigem Behälterinhalt nach einem Ausstreuen desselben zu verhindern. Um die erfindungsgemäße Funktion des Streusiebs zu verbessern, können die Streuöffnungen zumindest der ersten Reihe außerdem trichterförmig ausgebildet sein.

Die Definition der ersten Reihe von Streuöffnungen bedeutet im Rahmen der vorliegenden Erfindung im Übrigen nicht zwingend, dass die Streuöffnungen dieser ersten Reihe entlang einer Geraden oder einer Kurve aufgereiht sind. Umgekehrt bedeutet diese Definition ebenso wenig, dass die erfindungsgemäße Profilierung der Stege zwischen den einzelnen Schüttöffnungen bei allen Stegen zwischen allen Schüttöffnungen vorhanden sein müssen, die entlang einer Geraden oder einer Kurve aufgereiht sind. Der Begriff "erste Reihe von Schüttöffnungen" ist vielmehr im allgemeinen Wortsinne zu verstehen, d.h. bereits zwei ausgewählte Schüttöffnungen erfüllen den Wortsinn der "Reihe" im Sinne der vorliegenden Erfindung.

Nach einer besonders bevorzugten Ausgestaltung der vorliegenden Erfindung ist die erste Reihe von Streuöffnungen so am äußeren, zum Schüttrand der Schüttöffnung weisenden Rand des Streusiebs angeordnet, dass die Streuöffnungen den Streusieb-Rand durchbrechen und in Folge dessen im Wesentlichen C- oder U-förmig ausgebildet sind. Zwischen dem Schüttrand der Schüttöffnung und der untersten Reihe von Streuöffnungen sind nach dieser Ausgestaltung des erfindungsgemäßen Streusiebs gar keine Stege vorhanden, was nicht nur zur optimalen Lösung der gegebenen Aufgabe beiträgt, sondern außerdem ein vollständiges Entleeren des Behälters trotz Verwendung des Streusiebs erleichtert. Gleichzeitig können durch eine U-förmige Ausformung der randseitigen Streuöffnungen die zwischen den Streuöffnungen befindlichen Stege zum Rand des Streusiebs hin schmal gehalten werden, was die erfindungsgemäß gewölbte Profilierung vereinfacht.

Nach einer weiteren bevorzugten Ausgestaltung der Erfindung ist das Streusieb gegen die Hochachse des Behälters geneigt angeordnet. Durch eine solche geneigte Anordnung reicht es aus, wenn lediglich die Stege in der ersten Reihe von Streuöffnungen (soweit es überhaupt mehrere Reihen gibt) erfindungsgemäß nach Außen gewölbt profiliert sind. Denn beim Wiederabstellen des Behälters nach einem Streuvorgang werden etwa auf den Stegen zwischen weiteren Reihen von Streuöffnungen liegen gebliebene Körner aufgrund der Neigung des Streusiebs zur ersten Reihe von Streuöffnungen rollen und dort durch die Streuöffnungen hindurch in das Innere des Behälters zurückfallen.

Besonders bevorzugt ist der erfindungsgemäße Behälter mit einer Drehscheibe versehen, die die Schüttöffnung des Deckels abdeckt, wobei ein Segment der Drehscheibe Streuöffnungen aufweist und hierdurch das Streusieb bildet. Durch ein Drehen der Drehscheibe kann dann das Streusieb bedarfsweise über die Schüttöffnung gebracht oder von dieser weg bewegt werden. Die Drehscheibe kann drei Segmente aufweisen, wobei ein erstes Segment das Streusieb und ein zweites Segment eine geschlossene Abdeckung der Schüttöffnung bilden, während ein drittes Segment als Ausnehmung in der Drehscheibe ausgebildet ist und die Streuöffnung großflächig, vorzugsweise ganzflächig freigeben kann.

Vorteilhafterweise ist die Drehscheibe mit einer gegen die Hochachse des Behälters geneigten Drehachse am Behälterdeckel angebracht, wodurch sichergestellt ist, dass das Streusieb ebenfalls gegen die Hochachse des Behälters geneigt angeordnet ist. Gleichzeitig ermöglicht eine geneigte Drehachse der Drehscheibe, dass die Schüttöffnung des Deckels des erfindungsgemäßen Behälters nicht in einer zum Boden des Behälters parallelen Ebene verläuft, sondern zu diesem derart geneigt ist, dass der Schüttrand der Schüttöffnung tiefer liegt, als der geschlossene Bereich des Deckels. Dies ist einer vollständigen Entleerung des Behälters förderlich.

Weitere Vorteile ergeben sich, wenn die Drehscheibe auf ihrer nach Außen weisenden Oberfläche mit erhabenen Betätigungselementen versehen ist. Solche Betätigungselemente bieten den Fingern eines Benutzers vorteilhafte Angriffspunkte und fungieren dementsprechend als Drehhilfen. Darüber hinaus können die Betätigungselemente zusammen mit korrespondierenden Ausnehmungen im Behälterboden Stapelelemente zum Aufeinanderstapeln von zwei oder mehr Behältern bilden, und zwar insbesondere dann, wenn die Ausnehmungen im Behälterboden so ausgebildet sind, dass sie die erhabenen Betätigungselemente der Drehscheibe aufnehmen und hierdurch einen stabilen Stand eines auf einen anderen Behälter aufgestapelten ersten Behälters unterstützen. Darüber hinaus können die erhabenen Betätigungselemente eine Neigung der Drehscheibe für ein Aufeinanderstapeln von mehreren erfindungsgemäßen Behältern insofern ausgleichen, als ihr oberer Rand in einer Linie mit dem geschlossenen Bereich des Deckels zu Liegen kommt. Hierdurch ergibt sich auch dann eine vorteilhafte Stütze für einen darauf abzustellenden Behälter, wenn der Behälterboden keine spezielle Ausnehmungen für die Betätigungselemente aufweist.

Der Deckel des erfindungsgemäßen Behälters kann mit zwei stirnseitigen Schnapplaschen versehen sein, die auf zwei stirnseitig am Behältergrundkörper angebrachte Rastelemente aufschnappen. Hierbei kann zumindest eines der beiden Rastelemente zusammen mit der ihr zugeordneten Schnapplasche so ausgebildet sein, dass ein lösbares Scharnier gebildet wird. Die Schnapplasche ist dann also nicht nur auf das Rastelement aufgeschnappt, sondern in dieses eingehängt, wobei das Rastelement durch eine Durchbrechung der Schnapplasche hindurch aus dieser hervorsteht.

Der Deckel kann eine umlaufend eingelegte, weichelastische Dichtung zum Abdichten gegen den oberen Rand des Behältergrundkörpers aufweisen, um eine größtmögliche Dichtheit des geschlossenen Behälters zu gewährleisten. Insbesondere im Zusammenhang mit den oben erwähnten, bevorzugt zum Einsatz kommenden Schnapplaschen ergibt sich durch die eingelegte weichelastische Dichtung ein sehr gut dichtender Effekt, da die Schnapplaschen im Stande sind, den Deckel gegen den Behältergrundkörper vorzuspannen, was die eingelegte weichelastische Dichtung gegen den oberen Rand des Behältergrundkörpers presst.

Weitere Vorteile ergeben sich, wenn der Deckel im Bereich seiner Schüttöffnung einen in das Innere des Behältergrundkörpers reichenden, flächigen Vorsprung aufweist, um eine zum Schüttrand der Schüttöffnung des Deckels hin stetig verlaufende Rutschfläche für das Schütt- bzw. Streugut zu bilden. Besonders vorteilhaft ist dies, wenn der Behältergrundkörper zumindest im Bereich der Schüttöffnung des Deckels einen nach Außen versetzten, oberen Randbereich zum Aufsetzen des Deckels aufweist, wobei der nach Innen reichende Vorsprung des Deckels die hierdurch entstandene Hinterschneidung des Behältergrundkörpers abdeckt und in Folge dessen eine stetige Innenfläche des Behälters bis zum Schüttrand hin gewährleistet. Dies erleichtert ein gleichmäßiges Ausschütten oder Ausstreuen des Behälterinhalts, sowie ein vollständiges Entleeren desselben.

Der Schüttrand des Deckels kann als eine sich über das Streusieb nach Außen hin fortsetzende Schüttfläche ausgebildet sein, welche oben durch eine scharfe oder abgerundete Schüttkante begrenzt ist. Von dieser Schüttkante fällt die Schüttfläche zum Streusieb hin ab. Eine definierte Schüttkante erleichtert ein feines Dosieren des ausgeschütteten oder ausgestreuten Gutes. Hierbei ist es vorteilhaft, wenn die Schüttkante von der Außenfläche des Streusiebs beabstandet angeordnet ist. Allerdings barg dies bei gattungsgemäßen Behältern nach dem Stand der Technik eine erhöhte Gefahr des Liegenbleibens von Schütt- und Streugut auf den Stegen der ersten Reihe von Streuöffnungen, da bei einem Zurückbewegen des Behälters in seine Ausgangsstellung dasjenige Streugut, das zwar aus dem Streusieb ausgetreten, jedoch noch nicht über die Schüttkante hinweg gefallen war, auf der Außenfläche des Streusiebs liegengeblieben ist. Mit der vorliegenden Erfindung ist diese Gefahr eliminiert, so dass der erfindungsgemäße Behälter besonders bevorzugt mit einer derart ausgestalteten Schüttfläche versehen werden kann.

Ein Ausführungsbeispiel eines erfindungsgemäßen Behälters wird im Folgenden anhand der beigefügten Zeichnungen näher beschrieben und erläutert.

### Es zeigen:

- Figur 1: eine perspektivische Ansicht des vorliegenden Ausführungsbeispiels für einen erfindungsgemäßen Behälter;
- Figur 2: den Behälter aus Figur 1 in entsprechender Ansicht, jedoch mit abgehobener Drehscheibe;
- Figur 3: die Drehscheibe separat;

- Figur 4: den Schüttöffnungsbereich des Deckels des Behälters aus Figur 1;
- Figur 5: einen Schnitt durch die Darstellung aus Figur 4;
- Figur 6: den Schüttöffnungsbereich des Deckels aus Figur 4 von unten;
- Figur 7: einen Schnitt durch die Darstellung aus Figur 6;
- Figur 8: einen Schnitt durch den Behälter aus Figur 1.

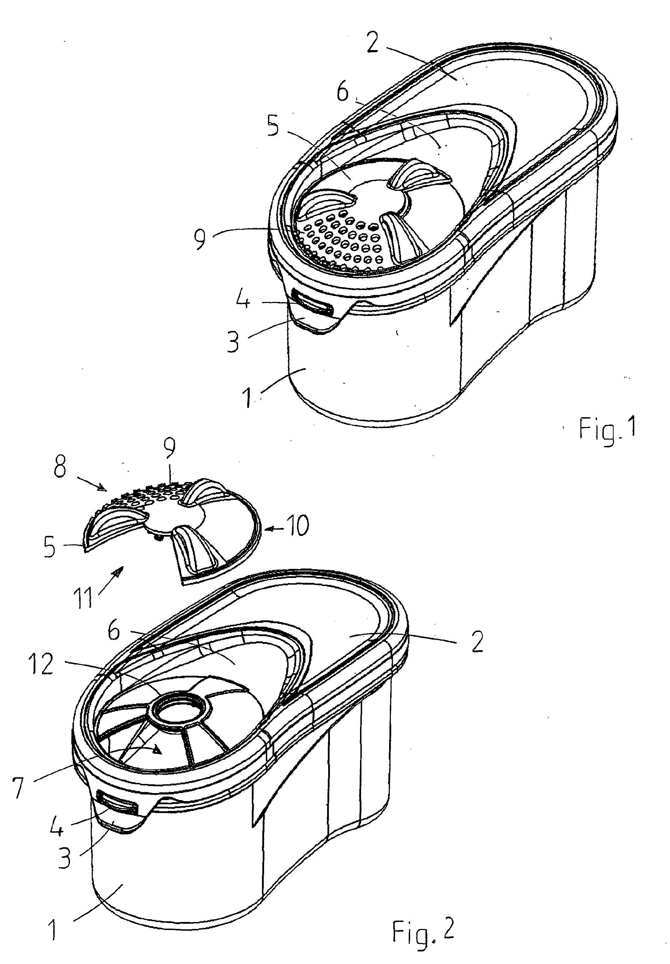

Der in Figur 1 in einer perspektivischen Ansicht von schräg oben dargestellt, erfindungsgemäß ausgestaltete Kunststoffbehälter für schüttbare Lebensmittel besteht aus einem Behältergrundkörper 1 und einem darauf aufgesetzten Deckel 2, der mittels Schnapplaschen 3 auf Rastelemente 4 des Behältergrundkörpers aufgeschnappt ist. Der vordere Rand des Behältergrundkörpers 1 ist abgesenkt, und im abgesenkten Bereich weist der Deckel 2 eine (hier nicht sichtbare) Schüttöffnung auf, die mit einer Drehscheibe 5 versehen ist. Die Drehscheibe 5 ist in einer Ausnehmung 6 des Deckels 2 an diesem drehbar befestigt, wobei die Drehachse gegenüber der Hochachse des Behälters nach vorne geneigt ist. Der Behältergrundkörper 1 ist mit taillierten Seitenwänden versehen, um ein leichtes und komfortables Ergreifen desselben zu gewährleisten.

Figur 2 ist mit der Darstellung aus Figur 1 identisch, bis auf die vom Deckel 2 gelöste Drehscheibe 5, wodurch eine Schüttöffnung 7 im Deckel 2 sichtbar wird. Die Drehscheibe 5 ist in drei Segmente unterteilt, wobei ein erstes Segment 8 ein Streusieb 9 bildet, ein zweites Segment 10 geschlossen ist und daher als Abdeckung der Schüttöffnung 7 dient, und ein drittes Segment 11 als Ausnehmung ausgebildet ist, die die Schüttöffnung 7 vollständig freigibt. Die Drehscheibe 5 wird in einem Drehscheibenlager 12 im Deckel 2 drehbar befestigt, so dass, je nach Stellung der Drehscheibe 5, die Schüttöffnung 7 freigegeben, komplett abgedeckt oder mit dem Streusieb 9 überdeckt wird. Um Lebensmittel in den Behältergrundkörper 1 einzufüllen oder größere Mengen desselben aus dem Behältergrundkörper 1 zu entnehmen, kann der Deckel 2 komplett abgenommen werden.

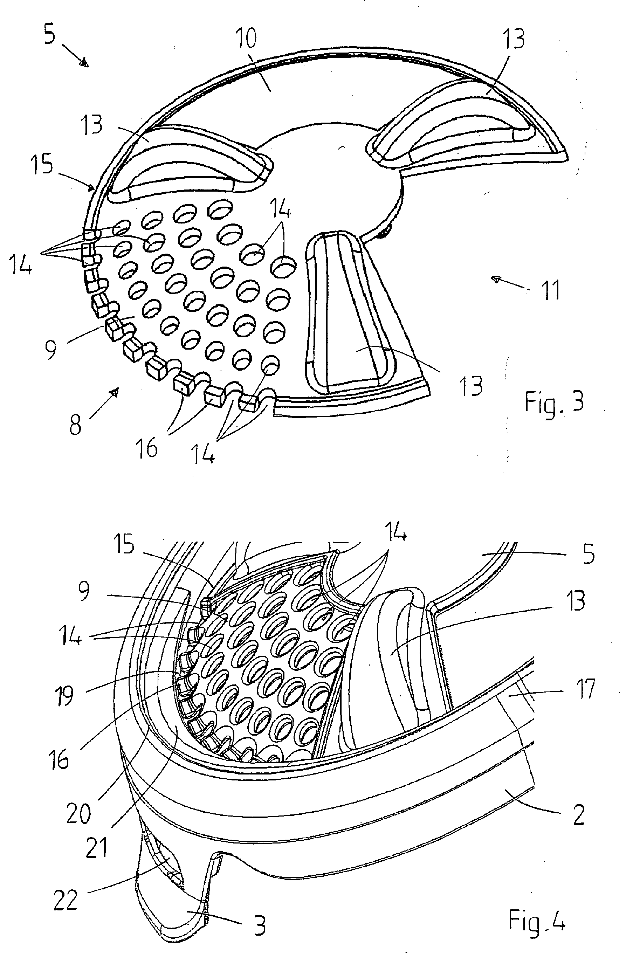

Figur 3 zeigt die Drehscheibe 5 in einer perspektivischen Ansicht nochmals im Detail. Deutlich zu erkennen sind die drei Segmente 8, 10 und 11, die durch jeweils ein erhabenes Betätigungselement 13 voneinander abgesetzt sind. Die Betätigungselemente 13 dienen als Drehhilfen, da sie von den Fingern einer Bedienperson leicht ergriffen werden können.

Das als Streusieb 9 ausgebildete erste Segment 8 der Drehscheibe 5 ist in Figur 3 so deutlich dargestellt, dass die erfindungsgemäßen Details sichtbar werden: Das Streusieb 9 des vorliegenden Ausführungsbeispiels besitzt insgesamt fünf vollständige Reihen von Streuöffnungen 14, wobei die Streuöffnungen 14 der ersten Reihe zum äußeren Rand 15 des Streusiebs 9 hin offen und daher U-förmig ausgebildet sind. Zwischen den einzelnen Streuöffnungen 14 dieser ersten, den Rand 15 durchbrechenden Reihe von Streuöffnungen 14 sind jeweils Stege 16 vorhanden, die durch das zwischen den Streuöffnungen 14 stehengebliebene Material des in sich starren Streusiebs 9 gebildet werden. Diese Stege 16 sind nun erfindungsgemäß mit einem nach Außen gewölbten Profil versehen, das zu den Streuöffnungen 14 hin jeweils abfällt, so dass beispielsweise Salzkörner, die nach einem Dosiervorgang auf der Außenfläche des Streusiebs 9 liegenbleiben, durch die Streuöffnungen 14 hindurch wieder in das Innere des Behälters zurückfallen.

Diese Funktionalität des Streusiebs 9 ist in Figur 4 besser erkennbar, in der derjenige Bereich des Deckels 2 mit seiner Drehscheibe 5 dargestellt ist, der die Schüttöffnung 7 umgibt. Hier ist zum einen deutlich zu erkennen, dass das Streusieb 9 eine nach vorne abfallend geneigte Oberfläche aufweist, so dass etwaige, auf dem Streusieb 9 verbleibende Körner beim Aufrichten des Behälters nach einem Streuvorgang nach vorne zur ersten Reihe von Streuöffnungen 14 rollen und dort aufgrund der gewölbten Ausformung der Stege 16 durch die Streuöffnungen 14 hindurch wieder zurück in das Innere des Behälters fallen. Wie hier außerdem deutlich wird, weisen die Stege 16 des vorliegenden Ausführungsbeispiels ein teils zylindrisches und teils sattelflächenartig geformtes Profil auf, wobei dieses Profil beidseits zu den Streuöffnungen 14 hin abfällt.

Unterstützend sind die Ränder der Streuöffnungen 14 trichterartig ausgeformt, so dass keine Körner des Streuguts auf der ersten Reihe von Streuöffnungen 14 liegenbleiben können. An dieser Stelle sei angemerkt, dass die erfindungsgemäße Wölbung der Stege zwischen den Streuöffnungen 14 auch zwischen sämtlichen Streuöffnungen 14, sowohl innerhalb der Reihen als auch zwischen den Reihen, vorhanden sein kann - was jedenfalls dann sinnvoll ist, wenn das Streusieb 9 nicht wie vorliegend geneigt angeordnet ist.

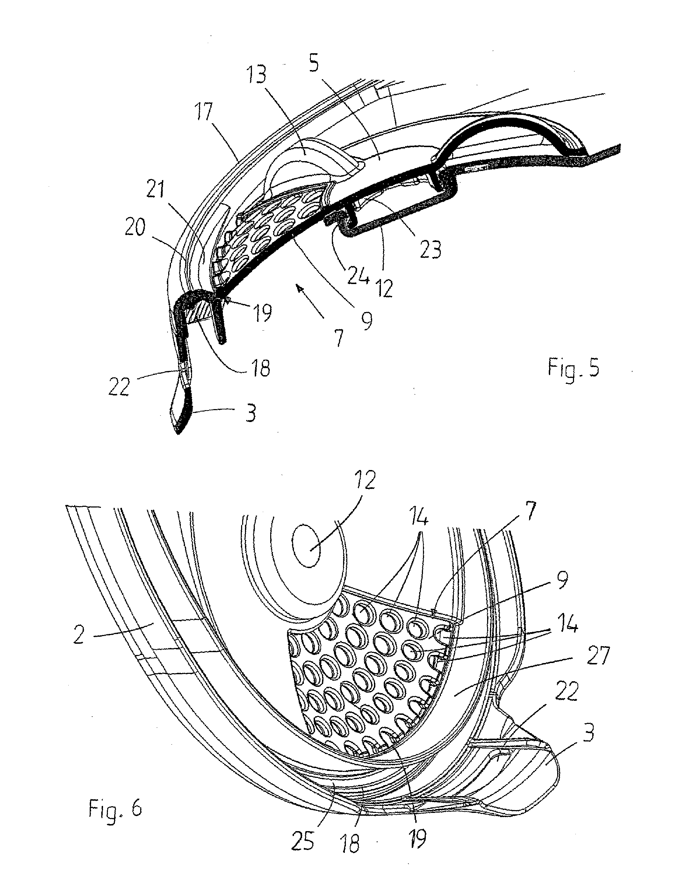

Wie Figur 4 außerdem verdeutlicht, ist der Deckel 2 des vorliegenden Ausführungsbeispiels mit einer wulstartigen Umrandung 17 versehen, die, wie in Figur 5 sichtbar ist, eine weichelastische Dichtung 18 aufnimmt. Der die Schüttöffnung 7 begrenzende Schüttrand 19 des Deckels setzt sich entlang dieser wulstartigen Umrandung 17 über die Außenfläche des Streusiebs 9 hinaus reichend als Schüttfläche 21 bis zu einer Schüttkante 20 fort, was ein exaktes Dosieren des Behälterinhalts ungemein erleichtert. Beim Zurückstellen des Behälters hinter der Schüttkante 20 verbleibendes Schütt- bzw. Streugut fällt auf das Streusieb 9 zurück, da die zwischen dem Schüttrand 19 und der Schüttkante 20 befindliche Schüttfläche 21 zum Streusieb 9 hin abfallend ausgebildet ist, und die auf das Streusieb 9 zurückgefallenen Körner fallen wegen der erfindungsgemäßen Profilierung der Stege 16 in der ersten Reihe von Streuöffnungen 14 zuverlässig durch die Streuöffnungen 14 hindurch zurück in den Behälter.

Anhand der Darstellung in Figur 4 wird nochmals deutlich, dass die erste Reihe von Streuöffnungen 14 so am äußeren, zum Schüttrand 19 weisenden Rand 15 der Drehscheibe 5 angeordnet ist, dass die Streuöffnungen 14, den Streusieb-Rand 15 durchbrechend, U-förmig ausgebildet sind. Da außerdem das Streusieb 9 so angeordnet ist, dass sein zum Schüttrand 19 weisender Rand 15 direkt entlang des Schüttrandes 19 verläuft, bildet die Schüttfläche 21 jeweils einen Wandungsteil der Streuöffnungen 14.

Wie in Figur 4, und ergänzend in den Figuren 5, 6 und 7 verdeutlicht ist, ist der Deckel 2 stirnseitig mit einer Schnapplasche 3 versehen, die eine Durchbrechung 22 zur Aufnahme des (hier nicht dargestellten) Rastelements 4 des Behältergrundkörpers 1 dient.

Figur 5 zeigt im Schnitt insbesondere die Aufnahme der Drehscheibe 5 im Drehscheibenlager 12 des Deckels 2 mittels hakenförmig ausgebildeter Halteelemente 23, die in einer Hinterschneidung 24 des Drehscheibenlagers 12 gleitend sitzen. Zur Erklärung der übrigen Bezugszeichen kann auf die Erläuterung der Figur 4 Bezug genommen werden.

Figur 6 zeigt den Bereich des Deckels 2, der in Figur 4 dargestellt ist, von innen bzw. unten. Hier wird ergänzend deutlich, dass der Deckel 2 im Bereich seines Schüttrandes 19, der die vordere Begrenzung der Schüttöffnung 7 bildet, einen als Rutschfläche 27 dienenden flächigen Vorsprung aufweist, der sich stetig über den Schüttrand 19 hinwegreichend als Schüttfläche 21 bis zur Schüttkante 20 nach Außen hin fortsetzt. Dies erleichtert sowohl eine genaue Dosierung als auch das völlige Entleeren des Behälters. Gut erkennbar ist in dieser Darstellung auch eine Nut 25, die zur Aufnahme des oberen Randes des Behältergrundkörpers 1 dient, und in die eine weichelastische Dichtung 18 eingelegt ist.

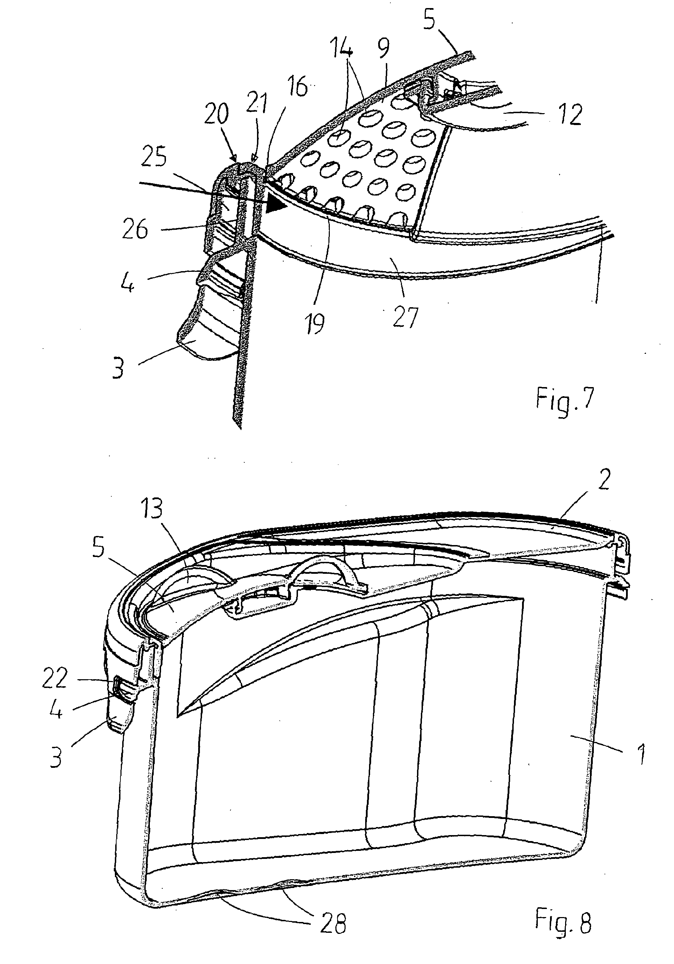

Figur 7 verdeutlicht in einer Schnittdarstellung die entsprechenden geometrischen Gegebenheiten, wobei hier der Deckel 2 auf den Behältergrundkörper 1 aufgesetzt ist. Der Behältergrundkörper 1 weist an seinem oberen Rand einen nach Außen versetzten, oberen Randbereich 26 auf, wodurch sich von innen gesehen eine Hinterschneidung ergibt, die vom die Rutschfläche 27 bildenden Vorsprung des Deckels 2 überdeckt wird, und zwar vorteilhafterweise bündig mit der Seitenwandung des Behältergrundkörpers 1. Hierdurch ergibt sich eine durchgehend stetige Fläche für das zu dosierende Gut durch das Streusieb 9 hindurch bis zur Schüttkante 20, die die stetig gewölbte Schüttfläche 21 schließlich begrenzt.

In der Darstellung der Figur 7 wird, wie auch in der Schnittdarstellung der Figur 8, außerdem die Befestigung des Deckels 2 am Behältergrundkörper 1 deutlich: Zwei hakenförmig ausgebildete Rastelemente 4 durchgreifen die Durchbrechungen 22 der Schnapplaschen 3 derart, dass dann, wenn nur eine der beiden Schnapplaschen 3 von ihrem zugehörigen Rastelement 4 gelöst wird, die gegenüberliegende Schnapplasche ein (lösbares) Scharnier am Rastelement 4 bildet.

In Figur 8 sind schließlich am Boden des Behältergrundkörpers 1 Ausnehmungen 28 zur Aufnahme von Betätigungselementen 13 der Drehscheibe 5 eines darunter stehenden Behälters angedeutet, was die Stapelbarkeit des hier dargestellten Ausführungsbeispiels verbessert.

## Patentansprüche

1. Behälter für schüttbare Lebensmittel, insbesondere aus Kunststoff, umfassend einen Behältergrundkörper (1) und einen Deckel (2) mit einer Schüttöffnung (7), die mit einem fest angeordneten oder bedarfsweise über die Schüttöffnung (7) bewegbaren, in sich starr ausgebildeten Streusieb (9) versehen ist, wobei das Streusieb (9) wenigstens eine erste Reihe von Streuöffnungen (14) aufweist, die im Wesentlichen entlang eines Schüttrandes (19) der Schüttöffnung (7) angeordnet und durch Stege (16) voneinander getrennt sind,
**dadurch gekennzeichnet,**
**dass** die Stege (16) zwischen den Streuöffnungen (14) zumindest der ersten Reihe ein auf der nach Außen weisenden Oberfläche des Streusiebs (9) gewölbtes, zu den Streuöffnungen (14) hin abfallendes Profil aufweisen.

2. Behälter nach Anspruch 1,
**dadurch gekennzeichnet,**
**dass** die Stege (16) ein im Wesentlichen zylindrisches oder konvexes Profil oder eine sattelflächenartige Form aufweisen.

3. Behälter nach einem der Ansprüche 1 oder 2,
**dadurch gekennzeichnet,**
**dass** die Streuöffnungen (14) zumindest der ersten Reihe trichterförmig ausgeformt sind.

4. Behälter nach mindestens einem der Ansprüche 1 bis 3,
**dadurch gekennzeichnet,**
**dass** die erste Reihe von Streuöffnungen (14) so am äußeren, zum Schüttrand (19) der Schüttöffnung (7) weisenden Rand (15) des Streusiebs (9) angeordnet ist, dass die Streuöffnungen (14) den Streusieb-rand (15) durchbrechen und in Folge dessen im Wesentlichen C- oder U-förmig ausgebildet sind.

5. Behälter nach mindestens einem der Ansprüche 1 bis 4,
**dadurch gekennzeichnet,**
**dass** das Streusieb (9) gegen die Hochachse des Behälters geneigt angeordnet ist.

6. Behälter nach mindestens einem der Ansprüche 1 bis 5,
**dadurch gekennzeichnet,**
**dass** die Schüttöffnung (7) von einer Drehscheibe (5) abgedeckt ist, wobei ein Segment (8) der Drehscheibe (5) das Streusieb (9) bildet.

7. Behälter nach den Ansprüchen 5 und 6,
**dadurch gekennzeichnet,**
**dass** die Drehscheibe (5) mit einer gegen die Hochachse des Behälters geneigten Drehachse drehbar am Behälterdeckel (2) angebracht ist.

8. Behälter nach einem der Ansprüche 6 oder 7,
**dadurch gekennzeichnet,**
**dass** die Drehscheibe (5) auf ihrer nach außen weisenden Oberfläche mit erhabenen Betätigungselementen (13) versehen ist.

9. Behälter nach Anspruch 8,
**dadurch gekennzeichnet,**
**dass** der Behälterboden Ausnehmungen (28) aufweist, die mit den Betätigungselementen (13) der Drehscheibe (5) korrespondieren, so dass sie, zusammen mit diesen, Stapelelemente zum Aufeinanderstapeln von zwei oder mehr Behältern bilden.

10. Behälter nach mindestens einem der Ansprüche 6 bis 9,
**dadurch gekennzeichnet,**
**dass** die Drehscheibe (5) drei Segmente (8, 10, 11) besitzt, wobei ein erstes Segment (8) das Streusieb (9) und ein zweites Segment (10) eine Abdeckung bilden, während ein drittes Segment (11) als Ausnehmung ausgebildet ist.

11. Behälter nach mindestens einem der Ansprüche 1 bis 10,
**dadurch gekennzeichnet,**
**dass** der Deckel (2) mit zwei stirnseitigen Schnapplaschen (3) auf zwei stirnseitig am Behältergrundkörper (1) angebrachte Rastelemente (4) aufschnappbar ist.

12. Behälter nach Anspruch 11,
**dadurch gekennzeichnet,**
**dass** zumindest eine Schnapplasche (3) und das ihr zugeordnete Rastelement (4) ein lösbares Scharnier bilden.

13. Behälter nach mindestens einem der Ansprüche 1 bis 12,
**dadurch gekennzeichnet,**
**dass** der Deckel (2) eine eingelegte, weichelastische Dichtung (18) zum Abdichten gegen den Behältergrundkörper (1) aufweist.

14. Behälter nach mindestens einem der Ansprüche 1 bis 13,
**dadurch gekennzeichnet,**
**dass** der Deckel (2) im auf den Behältergrundkörper (1) aufgesetzten Zustand einen in das Innere des Behältergrundkörpers (1) vorstehenden, flächigen Vorsprung aufweist, um eine zum Schüttrand (19) der Schüttöffnung (7) hin stetig verlaufende Rutschfläche (27) zu bilden.

15. Behälter nach Anspruch 14,
**dadurch gekennzeichnet,**
**dass** der Behältergrundkörper (1) zumindest im Bereich der Schüttöffnung (7) des Deckels (2) einen nach Außen versetzten, oberen Randbereich (26) zum Aufsetzen des Deckels (2) aufweist, wobei der die Rutschfläche (27) bildende Vorsprung des Deckels (2) eine durch den Randbereich (26) entstandene Hinterschneidung abdeckt.

16. Behälter nach mindestens einem der Ansprüche 1 bis 15,
**dadurch gekennzeichnet,**
**dass** der zum Schüttrand (19) der Schüttöffnung (7) weisende Rand (15) des Streusiebs (9) direkt entlang des Schüttrandes (19) angeordnet ist.

17. Behälter nach mindestens einem der Ansprüche 1 bis 16,
**dadurch gekennzeichnet,**
**dass** der Schüttrand (19) des Deckels (2) als eine sich über das Streusieb (9) nach Außen hin fortsetzende Schüttfläche (21) mit einer scharfen oder abgerundeten Schüttkante (20) ausgebildet ist.
